# EUROPÄISCHE PATENTSCHRIFT

(11) **EP 2 556 873 B1**
(45) Veröffentlichungstag und Bekanntmachung des Hinweises auf die Patenterteilung: **06.11.2013**
(21) Anmeldenummer: 11006603.2
(22) Anmeldetag: 11.08.2011
(51) Int. Cl.: B01D 45/16, B04C 3/06, B04C 5/06

(54) **Kondensatabscheider**
Condensate separator
Séparateur de condensat

(43) Veröffentlichungstag der Anmeldung: 13.02.2013
(73) Patentinhaber: Festo AG & Co. KG, 73734 Esslingen (DE)
(72) Erfinder: Batsch, Christoph, 73092 Heiningen (DE)
(74) Vertreter: Abel, Martin

(56) Entgegenhaltungen:
- DE-A1- 2 500 987
- DE-U1- 8 603 367
- US-A- 3 269 097
- US-A- 3 507 098
- US-A1- 2008 115 469

## Beschreibung

Die Erfindung betrifft einen Kondensatabscheider zum Abscheiden von Kondensat aus strömender Druckluft, mit einem zwischen einer Luftzuströmkammer und einer sich in Gebrauchslage des Kondensatabscheiders unterhalb der Luftzuströmkammer befindenden Kondensatauffangkammer angeordneten Luftdurchtrittsspalt, in dem ein sich um eine Mittellängsachse herum erstreckender Leitschaufelkranz einer die hindurchströmende Druckluft in Rotation versetzenden Drallerzeugungseinrichtung angeordnet ist, der eine Vielzahl von in der Spaltumfangsrichtung mit Abstand aufeinanderfolgenden und zwischen sich jeweils einen Luftdurchtrittskanal definierenden Leitschaufeln enthält, die jeweils eine der Luftzuströmkammer zugewandte freie Eintrittskante und eine nach unten weisende, der Kondensatauffangkammer zugewandte freie Austrittskante aufweisen und die jeweils bezüglich der Achsrichtung der Mittellängsachse schräg angestellt sind, wobei zumindest ein Abschnitt der freien Austrittskante der Leitschaufeln als in eine Tropfenabrisszone übergehende Tropfenableitkante mit bezogen auf die Mittellängsachse des Leitschaufelkranzes nach radial außen und zugleich nach unten in Richtung zu der Kondensatauffangkammer orientiertem Verlauf ausgebildet ist und wobei die Drallerzeugungseinrichtung einen Leitschaufelträger mit einer der Kondensatauffangkammer zugewandten unteren Stirnfläche und mit einer bezüglich der Mittellängsachse konzentrischen und nach radial außen orientierten Schaufelträgerfläche aufweist, wobei die Leitschaufeln radial abstehend an der Schaufelträgerfläche angeordnet sind

Kondensatabscheider dieser Art werden häufig in Druckluftnetzen zur sogenannten Aufbereitung der von der Druckluftquelle zu einem oder mehreren Verbrauchern strömenden Druckluft eingesetzt. Der Kondensatabscheider kann allein oder in Kombination mit weiteren Luftaufbereitungsmodulen wie beispielsweise Filtermodule und/oder Druckregelmodule eingesetzt werden. Oftmals sind Kondensatabscheider, wie beispielsweise durch die EP 1 586 363 B1 dokumentiert wird, mit anderen Luftaufbereitungsfunktionen zu einem kombinierten Luftaufbereitungsgerät zusammengefasst, beispielsweise zu einem Kondensatfilter.

Ein aus der DE 10 2010 005 981 A1 bekannter Kondensatabscheider arbeitet nach dem Zentrifugalprinzip. Er weist einen zwischen einer Luftzuströmkammer und einer Kondensatauffangkammer angeordneten ringförmigen Luftdurchtrittsspalt auf, in dem ein Leitschaufelkranz einer Drallerzeugungseinrichtung angeordnet ist. Der Leitschaufelkranz enthält eine Vielzahl bezüglich der Achsrichtung der Mittellängsachse des Leitschaufelkranzes schräg angestellter Leitschaufeln, die der durch den Luftdurchtrittsspalt hindurchtretenden Druckluft einen Drall versetzen, so dass die Druckluft zu einer Rotationsbewegung veranlasst wird und in ihr enthaltene Flüssigkeitspartikel fliehkraftbedingt abgeschieden werden.

Mit einem Leitschaufelkranz ausgestattete Kondensatabscheider arbeiten bei hohen und auch bei sehr geringen Volumenströmen sehr zuverlässig. Bei hohen Volumenströmen und daraus resultierenden hohen Strömungsgeschwindigkeiten wirkt eine hohe Fliehkraft auf die Flüssigkeitspartikel. Bei sehr geringen Strömungsgeschwindigkeiten tritt zwar kaum oder keine Fliehkraft auf, jedoch kann das Kondensat hierbei ohne weiteres nach unten in die Kondensatauffangkammer abtropfen. Ein schwieriger Betriebszustand findet sich im Übergangsbereich zwischen kleinen und hohen Strömungsgeschwindigkeiten, wobei hier festgestellt wurde, dass sich Kondensattropfen an der Unterseite der Drallerzeugungseinrichtung ansammeln oder gar im Kreis herumwandern, so dass sie von der aus der Kondensatauffangkammer wieder austretenden Druckluft mitgerissen werden können und somit letztlich doch in der Druckluft verbleiben. Dies mindert die Effektivität des Abscheidevorganges.

Maßnahmen, die der Druckluft unabhängig vom Volumenstrom eine ausreichend hohe Strömungsgeschwindigkeit verleihen, wie sie bei dem Kondensatabscheider der DE 10 2010 005 981 A1 vorhanden sind, können dem geschilderten Effekt zwar entgegentreten, ihn jedoch nicht gänzlich ausschließen.

Aus der DE-AS 1 042 359 ist ein Kondensatabscheider bekannt, der über eine Drallerzeugungseinrichtung verfügt, die ebenfalls mit Mitteln ausgestattet ist, um der vom Kondensat zu befreienden Druckluft unabhängig vom Volumenstrom eine ausreichend hohe Strömungsgeschwindigkeit zu verleihen. Bei diesem Kondensatabscheider sind die Leitschaufeln bezüglich der Achsrichtung der Mittellängsachse des Leitschaufelkranzes nicht schräg angestellt und haben eine radial nach außen orientierte vertikale Austrittskante.

Ein aus der US 3 507 098 A bekannter Kondensatabscheider enthält eine Dralleinrichtung mit einem sich nach unten hin konisch erweiternden Leitschaufelträger, an dessen Außenfläche oberhalb seiner unteren Stirnfläche ein Leitschaufelkranz angeordnet ist. Der Leitschaufelkranz enthält mehrere schrägstehende Leitschaufeln, die nach unten hin spitz zulaufen. Der Erfindung liegt die Aufgabe zugrunde, Maßnahmen zu treffen, die die Effektivität des Kondensatabscheidevorganges bei einem mit einem Leitschaufelkranz ausgestatteten Kondensatabscheider verbessern.

Zur Lösung dieser Aufgabe ist in Verbindung mit den eingangs genannten Merkmalen vorgesehen, dass die untere Stirnfläche des Leitschaufelträgers bündig in die freien Austrittskanten der Leitschaufeln übergeht, deren Tropfenabrisszonen tiefer liegen als die untere Stirnfläche des Leitschaufelträgers.

Auf diese Weise wird erreicht, dass insbesondere bei mittleren Strömungsgeschwindigkeiten der Druckluft die nicht durch die Fliehkraft nach außen geworfenen Flüssigkeitspartikel aufgrund ihres Gewichts an der nach unten weisenden Tropfenableitkante nach außen und zugleich nach unten wandern und dann an der sich an die Tropfenableitkante anschließenden Tropfenabrisszone abreißen und nach unten in die Kondensatauffangkammer abfallen. Mithin geraten diese Flüssigkeitstropfen nicht oder nur zu einem geringen Prozentsatz in den Bereich der aus der Kondensatauffangkammer wieder austretenden Druckluft und können folglich auch nicht von dieser Druckluft mitgerissen werden. Die vom Kondensat befreite Druckluft wird somit nicht mehr oder zumindest in nur noch sehr geringem Maße erneut mit Flüssigkeit angereichert, was insgesamt eine sehr hohe Abscheidequalität gewährleistet. Diese hohe Abscheidequalität liegt in einer großen Bandbreite der Strömungsgeschwindigkeit der Druckluft vor. Außerdem kann sie mit sehr einfachen gestalterischen Maßnahmen der Leitschaufeln kostengünstig bewirkt werden.

Die Drallerzeugungseinrichtung enthält einen die Leitschaufeln tragenden Leitschaufelträger, der eine bezüglich der Mittellängsachse des Leitschaufelkranzes konzentrische und nach radial außen orientierte Schaufelträgerfläche aufweist, an der die Leitschaufeln radial abstehend angeordnet und insbesondere einstückig angeformt sind. Der Leitschaufelträger weist an seiner der Kondensatauffangkammer zugewandten Stirnseite eine Stirnfläche auf, die bündig in die sich radial außen daran anschließenden Austrittskanten und bevorzugt unmittelbar in die Tropfenableitkanten der Leitschaufeln übergeht. Somit können Kondensattropfen, die sich an der Stirnfläche kurzzeitig ablagern, problemlos zu den Austrittskanten übertreten und zu den Tropfenabrisszonen wandern.

Vorteilhafte Weiterbildungen der Erfindung gehen aus den Unteransprüchen hervor.

Die Tropfenableitkante hat vorzugsweise einen konkav gekrümmten Verlauf. Hierbei bietet sich vor allem eine durchgehend stetig bogenförmige Krümmung an. Ebenfalls möglich ist insbesondere ein geradliniger Schrägverlauf der Tropfenableitkante. Darüber hinaus kann sich der Verlauf der Tropfenableitkante aus mehreren Längenabschnitten zusammensetzen, von denen mindestens einer konkav gekrümmt und mindestens ein weiterer geradlinig schräg ausgebildet ist.

Die Tropfenabrisszone kann bei entsprechender Gestaltung der Tropfenableitkante eine spitze Kontur haben und sich beispielsweise daraus ergeben, dass die Tropfenableitkante mit bezüglich der Achsrichtung der Mittellängsachse schrägem Verlauf in eine radial nach außen orientierte freie Außenkante der betreffenden Leitschaufel übergeht. Als besonders vorteilhaft hat es sich allerdings erwiesen, wenn die Tropfenabrisszone als über eine gewisse Länge verfügende Tropfenabrisskante ausgebildet ist, die von einem sich bezogen auf die Mittellängsachse radial außen an die Tropfenableitkante anschließenden Abschnitt der Austrittskante gebildet ist. Besonders zweckmäßig ist es hierbei, wenn die Tropfenabrisskante bezüglich einer zu der Mittellängsachse rechtwinkeligen Radialebene weniger steil verläuft als der sich unmittelbar davor befindende Endbereich der Tropfenableitkante.

Es ist zweckmäßig, wenn die Tropfenabrisskante sich in einer zu der Mittellängsachse rechtwinkeligen Radialebene erstreckt.

Die Austrittskante der Leitschaufeln hat zweckmäßigerweise im Übergangsbereich zwischen der Tropfenableitkante und der Tropfenabrisszone einen hervorstehenden Knick.

Jede Leitschaufel hat zweckmäßigerweise einen Bereich maximaler Breite. Dieser Bereich maximaler Breite befindet sich insbesondere unmittelbar im Anschluss an die Eintrittskante. Im Bereich der Tropfenabrisskante ist die Breite der Leitschaufel aufgrund der in Richtung zur Luftzuströmkammer zurückversetzten Tropfenableitkante vorzugsweise geringer als die vorgenannte maximale Breite und beträgt dabei insbesondere maximal die Hälfte der maximalen Breite. Als besonders vorteilhaft wird es angesehen, wenn die Breite der Leitschaufel im Bereich der Tropfenabrisszone lediglich zwischen 5 % und 30 % der maximalen Breite der Leitschaufel beträgt.

Die bezüglich der Mittellängsachse radial nach außen orientierten Austrittskanten der einzelnen Leitschaufeln sind zweckmäßigerweise als freie Außenkanten ausgebildet. Es wäre gleichwohl prinzipiell denkbar, radial um den Leitschaufelkranz herum einen Abdeckring vorzusehen, an dem die Leitschaufeln mit ihrer Außenkante befestigt sind.

Bei dem Leitschaufelträger handelt es sich zweckmäßigerweise zumindest partiell und vorzugsweise gesamthaft um einen Hohlkörper, insbesondere mit einer koaxial mittig durchgehenden Öffnung.

Die Austrittskanten der Leitschaufeln sind zweckmäßigerweise so gestaltet, dass sie jeweils ohne Zwischenraum direkt in die Schaufelträgerfläche des Leitschaufelträgers übergehen. Die Austrittskante ist hierbei insbesondere so gestaltet, dass sich die Tropfenableitkante bis hin zu der Schaufelträgerfläche erstreckt. Anders ausgedrückt beginnt hierbei die Tropfenableitkante direkt an der Schaufelträgerfläche und erstreckt sich ausgehend von dort bis hin zu der Tropfenabrisszone.

Die Leitschaufeln sind zweckmäßigerweise an einem äußeren Ringabschnitt des Leitschaufelträgers angeordnet, der über eine der Kondensatauffangkammer zugewandte ringförmige Stirnfläche verfügt, die zweckmäßigerweise bündig in die Austrittskanten der Leitschaufeln übergeht. Diese Stirnfläche ist vorzugsweise konisch gestaltet, mit konischer Erweiterung in der axialen Richtung zu der unterhalb des Leitschaufelkranzes angeordneten Kondensatauffangkammer hin.

Der die Schaufelträgerfläche definierende äußere Ringabschnitt ist zweckmäßigerweise mit radialem Abstand unter Freilassung eines zur Kondensatauffangkammer hin offenen Ringspaltes um einen inneren Ringabschnitt des Leitschaufelträgers herum angeordnet. Beide Ringabschnitte sind zweckmäßigerweise einstückig miteinander verbunden.

Ein zweckmäßig ausgestalteter Kondensatabscheider verfügt über ein die Luftzuströmkammer und die Kondensatauffangkammer definierendes Gehäuse. Ein Gehäusekopf dieses Gehäuses weist einen Lufteinlass und einen Luftauslass auf, wobei der Lufteinlass mit der Luftzuströmkammer und der Luftauslass mit der Kondensatauffangkammer verbunden ist. Die vom Kondensat befreite Druckluft kann zweckmäßigerweise durch die Drallerzeugungseinrichtung und insbesondere durch den gegebenenfalls vorhandenen Leitschaufelträger hindurch aus der Kondensatauffangkammer zu dem Luftauslass gelangen. Die Kondensatauffangkammer ist zweckmäßigerweise in einer unten an den Gehäusekopf in bevorzugt lösbarer Weise angesetzten Auffangschale ausgebildet. An der Unterseite der Auffangschale befindet sich zweckmäßigerweise ein Kondensatablassventil, mit dem das sich ansammelnde Kondensat bei Bedarf oder automatisch pegelstandsabhängig abgelassen werden kann.

Die erfindungsgemäßen Maßnahmen sind bei dem Kondensatabscheider unabhängig davon realisierbar, ob oder ob nicht zusätzliche Mittel vorhanden sind, die eine volumenstromabhängige Veränderung des Strömungsquerschnittes der zwischen jeweils benachbarten Leitschaufeln definierten Luftdurchtrittskanäle bewirken. Solche Mittel können dazu beitragen, die Strömungsgeschwindigkeit der Druckluft auch bei Schwankungen des Volumenstromes auf einem für den Abscheideeffekt optimalen Niveau zu halten.

Nachfolgend wird die Erfindung anhand der beiliegenden Zeichnung näher erläutert. In dieser zeigen:
- Figur 1: einen Längsschnitt durch eine bevorzugte Ausführungsform des erfindungsgemäßen Kondensatabscheiders mit einer in einem Gehäuse untergebrachten Drallerzeugungseinrichtung,
- Figur 2: die Drallerzeugungseinrichtung des in Figur 1 gezeigten Kondensatabscheiders in einer Einzeldarstellung im Längsschnitt,
- Figur 3: den in Figur 2 strichpunktiert umrahmten Ausschnitt III der Drallerzeugungseinrichtung in einer vergrößerten Darstellung, wobei der Leitschaufelträger ungeschnitten abgebildet ist,

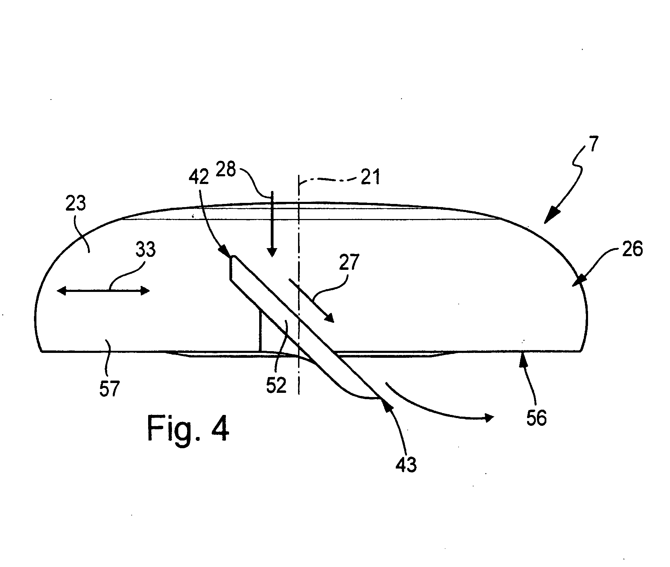

- Figur 4: eine Seitenansicht der in Figuren 2 und 3 illustrierten Drallerzeugungseinrichtung mit Blickrichtung gemäß Pfeil IV von radial außen her, wobei von dem Leitschaufelkranz der Übersichtlichkeit wegen nur eine einzige Leitschaufel gezeigt ist,

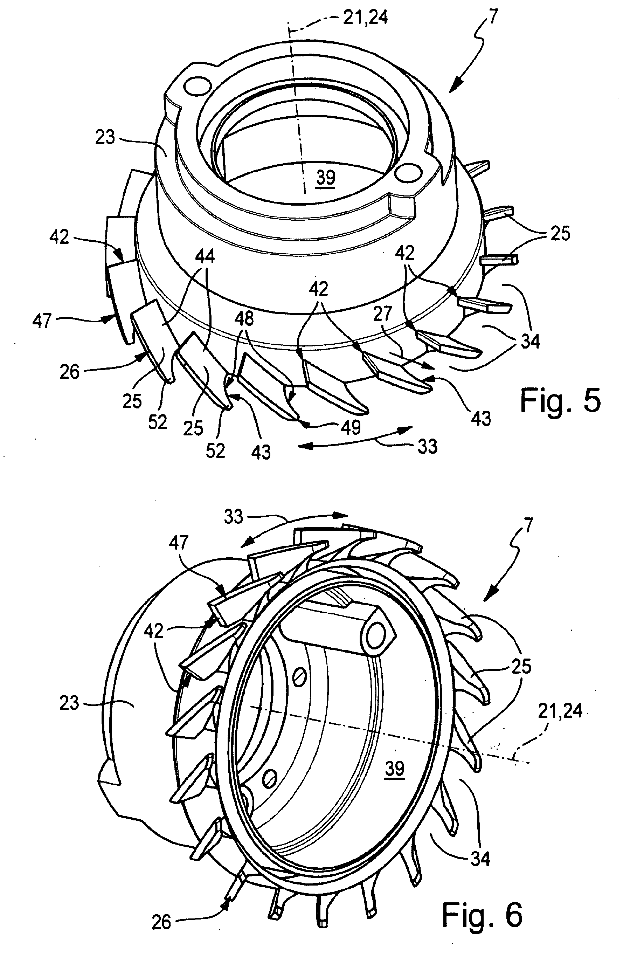

- Figur 5: eine perspektivische Einzeldarstellung der Drallerzeugungseinrichtung mit Blickrichtung von der Seite der Luftzuströmkammer her, und
- Figur 6: eine weitere perspektivische Einzeldarstellung der Drallerzeugungseinrichtung mit schräger Ansicht von der Seite der Kondensatauffangkammer her.

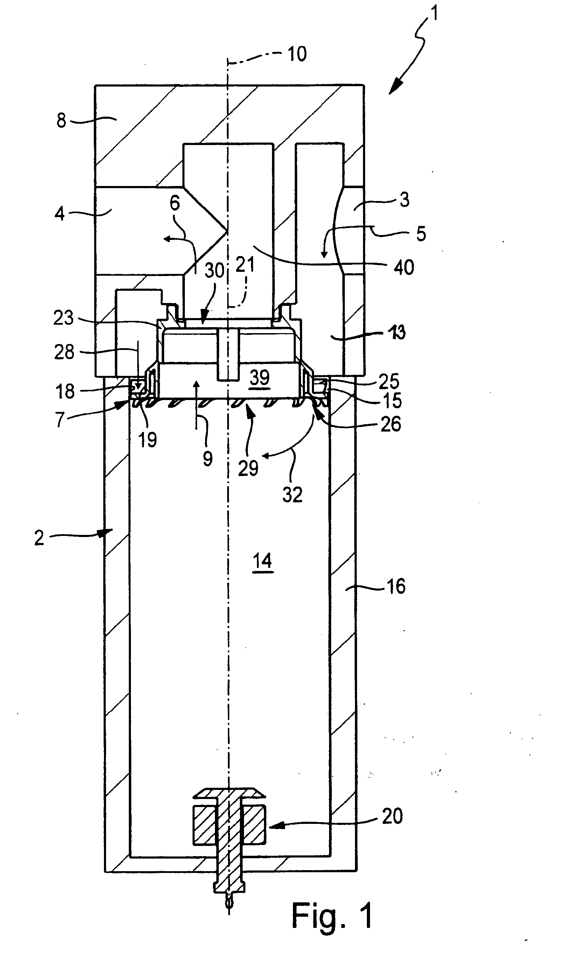

Die Figur 1 zeigt einen zur Aufbereitung von Druckluft eingesetzten Kondensatabscheider 1, der über ein Gehäuse 2 verfügt, an dem in von außen her zugänglicher Weise ein Lufteinlass 3 und ein Luftauslass 4 ausgebildet sind. Im Betrieb des Kondensatabscheiders strömt gemäß Pfeil 5 über den Lufteinlass 3 mit Kondensat angereicherte Druckluft in das Gehäuse 2 ein, die nach Befreiung von dem Kondensat gemäß Pfeil 6 durch den Luftauslass 4 hindurch wieder aus dem Gehäuse 2 austritt.

Beim Hindurchströmen durch das Gehäuse 2 wird das in der Druckluft enthaltene Kondensat mittels einer im Strömungsweg der Druckluft platzierten Drallerzeugungseinrichtung 7 abgeschieden. Das abgeschiedene Kondensat sammelt sich in einem in der Gebrauchslage des Kondensatabscheiders 1 unterhalb der Drallerzeugungseinrichtung 7 angeordneten Kondensatauffangkammer 14.

Ein dem unteren Endbereich der Kondensatauffangkammer 14 zugeordnetes Kondensatablassventil 20 ist in der Lage, das angesammelte Kondensat abzulassen. Es kann sich um ein manuell oder um ein automatisch betätigtes Kondensatablassventil 20 handeln. Ein automatisch betätigtes Kondensatablassventil 20 wird in Abhängigkeit vom Pegelstand des sich ansammelnden Kondensates aktiviert und enthält insbesondere einen Schwimmer als Bestandteil einer Betätigungseinrichtung.

Mit seinem Lufteinlass 3 und Luftauslass 4 kann das Gehäuse 2 in den Verlauf einer Druckluftleitung eingeschaltet werden, die beispielsweise dazu dient, von einem Drucklufterzeuger bereitgestellte Druckluft einem oder mehreren an den Luftauslass 4 angeschlossenen Verbrauchern zur Verfügung zu stellen.

Der Kondensatabscheider 1 kann ein Druckluftaufbereitungsmodul sein, das mit weiteren Druckluftaufbereitungsmodulen zu einer Aufbereitungseinheit zusammengefasst werden kann. Mehrere Druckluftaufbereitungsmodule sind hierbei in Reihe geschaltet. Bauarten weiterer Druckluftaufbereitungsmodule sind beispielsweise Druckluftöler, Druckluftfilter oder Druckregelventile. Häufig werden Druckluftaufbereitungsmodule auch als Wartungsmodule oder Wartungsgeräte bezeichnet.

Das Gehäuse 2 hat eine Längsachse 10. In der üblichen Gebrauchslage des Kondensatabscheiders 1 ist diese Längsachse 10 vertikal ausgerichtet. Die weiteren Ausführungen und insbesondere die hierbei verwendeten Bezugnahmen wie "oben", "unten" etc. beziehen sich auf diese Gebrauchslage.

Vorzugsweise verfügt das Gehäuse 2 über einen oben angeordneten Gehäusekopf 8, in dem zweckmäßigerweise sowohl der Lufteinlass 3 als auch der Luftauslass 4 ausgebildet sind. Vorzugsweise befinden sich der Lufteinlass 3 und der Luftauslass 4 an einander entgegengesetzt orientierten Außenflächen des beispielsweise würfelförmigen Gehäusekopfes 8. Ein weiterer Bestandteil des Gehäuses 2 ist exemplarisch eine becherförmig ausgebildete Auffangschale 16, die mit ihrer offenen Seite voraus unten an den Gehäusekopf 8 in bevorzugt lösbarer Weise angesetzt ist. Diese Auffangschale 16 begrenzt seitlich und unten die Kondensatauffangkammer 14. Sie trägt außerdem in ihrem Bodenbereich das Kondensatablassventil 20.

Im Innern des Gehäuses 2 und insbesondere in dem Gehäusekopf 8 ist eine Luftzuströmkammer 13 ausgebildet. Bei ihr handelt es sich insbesondere um eine zu der Längsachse 10 konzentrische Ringkammer. Diese Luftzuströmkammer 13 liegt in Achsrichtung der Längsachse 10 oberhalb der Kondensatauffangkammer 14 und ist mit Letzterer über einen zu der Längsachse 10 konzentrischen, ringförmigen Luftdurchtrittsspalt 15 fluidisch verbunden.

Die Drallerzeugungseinrichtung 7 ist bevorzugt koaxial zwischen der Luftzuströmkammer 13 und der Kondensatauffangkammer 14 angeordnet. Vorzugsweise ist die Drallerzeugungseinrichtung 7 so ausgebildet, dass sie eine radial innen angeordnete Begrenzungswand 19 der Luftzuströmkammer 13 und des Luftdurchtrittsspaltes 15 bildet.

Der Lufteinlass 3 steht mit der Luftzuströmkammer 13 in ständiger Fluidverbindung. Ebenso besteht eine ständige Fluidverbindung zwischen dem Luftauslass 4 und der Kondensatauffangkammer 14.

Im Betrieb des Kondensatabscheiders 1 gelangt die über den Lufteinlass 3 gemäß Pfeil 5 eintretende Druckluft zunächst in die Luftzuströmkammer 13, dann von dort aus durch den Luftdurchtrittsspalt 15 hindurch in die Kondensatauffangkammer 14 und schließlich von dort aus gemäß Pfeil 9 zu dem Luftauslass 4. Der Fluidübertritt zwischen der Kondensatauffangkammer 14 und dem Luftauslass 4 findet gemäß Pfeil 9 zweckmäßigerweise durch die beim Ausführungsbeispiel in ihrem Innern hohl ausgebildete Drallerzeugungseinrichtung 7 hindurch statt.

Der Luftdurchtrittsspalt 15 ist radial außen von einer zu der Längsachse 10 konzentrischen, ringförmigen äußeren Begrenzungswand 18 begrenzt. Selbige ist ortsfest bezüglich des Gehäuses 2 angeordnet und insbesondere ein unmittelbarer Bestandteil des Gehäuses 2. Exemplarisch ist sie von einer Seitenwand der Auffangschale 16 gebildet.

Radial innen ist der Luftdurchtrittsspalt 15 von einer oben schon erwähnten, zu der Längsachse 10 ebenfalls konzentrischen inneren Begrenzungswand 19 begrenzt. Auch die innere Begrenzungswand 19 ist gehäusefest angeordnet. Exemplarisch und vorteilhaft ist sie von einem noch zu erläuternden Leitschaufelträger 23 gebildet, der zu der Drallerzeugungseinrichtung 7 gehört und der im Innern des Gehäuses 2 angeordnet ist.

Der Leitschaufelträger 23 ist vorzugsweise als ringförmiges oder hülsenförmiges Gebilde ausgeführt und zweckmäßigerweise als Hohlkörper konzipiert. Er besteht vorzugsweise aus einem Kunststoffmaterial. Er hat eine zentrale Längsachse 24, die mit der Längsachse 10 zusammenfällt. Außerdem verfügt er über eine der Kondensatauffangkammer 14 zugewandte Unterseite 29 sowie eine axial entgegengesetzt orientierte Oberseite 30. Er umschließt eine axial durchgehende Durchgangsöffnung 39, die einerseits zu der Unterseite 29 und andererseits zu der Oberseite 30 ausmündet. Somit stellt die Durchgangsöffnung 39 eine durchgehende Fluidverbindung zwischen der unterhalb der Drallerzeugungseinrichtung 7 angeordneten Kondensatauffangkammer 14 und einer sich oberhalb der Drallerzeugungseinrichtung 7 anschließenden und mit dem Luftauslass 4 kommunizierenden Auslasskammer 40 her, wobei durch sie hindurch die vom Kondensat befreite Druckluft gemäß Pfeil 9 abströmen kann.

Die Drallerzeugungseinrichtung 7 verfügt des Weiteren über einen sich konzentrisch um eine Mittellängsachse 21 herum erstreckenden Leitschaufelkranz 26, der konzentrisch in dem Luftdurchtrittsspalt 15 platziert ist. Dieser Leitschaufelkranz 26 setzt sich aus einer Vielzahl einzelner Leitschaufeln 25 zusammen, die in der Spaltumfangsrichtung 33, also in der Umfangsrichtung der Mittellängsachse 21, mit Abstand aufeinanderfolgend angeordnet sind. Jede dieser Leitschaufeln 25 ist individuell an dem Leitschaufelträger 23 befestigt.

Besonders vorteilhaft ist eine einstückige Ausgestaltung der Leitschaufeln 25 mit dem Leitschaufelträger 23. Es empfiehlt sich eine Spritzgießherstellung aus einem Kunststoffmaterial. Vorzugsweise ist die gesamte Drallerzeugungseinrichtung 7 ein einstückiger, insbesondere durch Spritzgießen aus Kunststoffmaterial hergestellter Körper.

Die Drallerzeugungseinrichtung 7 ist zweckmäßigerweise von der der Auffangschale 16 zugewandten Unterseite her unten an dem Gehäusekopf 8 angebracht.

Die in dem Luftdurchtrittsspalt 15 angeordneten Leitschaufeln 25 werden im Betrieb des Kondensatabscheiders 1 aus der Luftzuströmkammer 13 im Wesentlichen axial, also parallel zu der Längsachse 10, angeströmt. In der Zeichnung ist dies durch Strömungspfeile 28 illustriert. Die derart ankommende Druckluft wird durch die bezüglich der Achsrichtung der Mittellängsachse 21 schräg angestellten Leitschaufeln 25 umgelenkt, so dass sie gemäß Pfeil 27 mit bezüglich der Achsrichtung der Mittellängsachse 21 schräger Ausrichtung durch die zwischen in der Spaltumfangsrichtung 33 jeweils zueinander benachbarten Leitschaufeln 25 ausgebildeten Luftdurchtrittskanäle 34 hindurch von oben her in die Kondensatauffangkammer 14 eintritt. Aufgrund der Umlenkung erfährt die mit Kondensat angereicherte Druckluftströmung beim Hindurchtreten durch die Luftdurchtrittskanäle 34 hindurch einen Drall, so dass sie gemäß Strömungspfeil 32 eine Richtungskomponente quer zur Längsachse 10 erhält und in Rotation um diese Längsachse 10 herum versetzt wird. Die hierbei auf das in der Druckluft enthaltene Kondensat wirkenden Fliehkräfte befördern das Kondensat nach radial außen, so dass es sich an der seitlichen Begrenzungswand der Kondensatauffangkammer 14 niederschlägt und daran nach unten in den unteren Bereich der Kondensatauffangkammer 14 abfließen kann.

Jede Leitschaufel 25 hat eine der Luftzuströmkammer 13 axial zugewandte freie Eintrittskante 42. Diese Eintrittskante 42 erstreckt sich zweckmäßigerweise in einer zu der Mittellängsachse 21 rechtwinkeligen Ebene und ist insbesondere radial bezüglich dieser Mittellängsachse 21 ausgerichtet.

Jede Leitschaufel 25 hat außerdem eine in der Achsrichtung der Mittellängsachse 21 nach unten weisende freie Austrittskante 43. Die Austrittskante 43 ist der Kondensatauffangkammer 14 zugewandt.

Jede Leitschaufel 25 verfügt des Weiteren über einen radial innen angeordneten, sich zwischen der freien Eintrittskante 42 und der freien Austrittskante 43 erstreckenden inneren Randbereich 44, mit dem sie an der inneren Begrenzungswand 19 des Luftdurchtrittsspalts 15 befestigt ist. Hierbei liegt zweckmäßigerweise eine starre Befestigung vor. Ausgehend von der inneren Begrenzungswand 19 ragt jede Leitschaufel 25 zweckmäßigerweise in einer zu der Mittellängsachse 21 radialen Richtung nach radial außen weg.

Wie schon erwähnt, ist die innere Begrenzungswand 19 zweckmäßigerweise von dem Leitschaufelträger 23 gebildet. Hierzu verfügt der Leitschaufelträger 23 über eine sich konzentrisch um die Mittellängsachse 21 herum erstreckende und bevorzugt kreiszylindrisch gestaltete und dabei nach radial außen orientierte Schaufelträgerfläche 45, an der die Leitschaufeln 25 angebracht sind. Vorzugsweise sind die Leitschaufeln 25 an der Schaufelträgerfläche 45 einstückig mit dem Leitschaufelträger 23 verbunden. Die Schaufelträgerfläche 45 bildet exemplarisch unmittelbar die innere Begrenzungswand 19 des Luftdurchtrittsspaltes 15.

Zweckmäßigerweise geht jede Leitschaufel 25 an ihrem inneren Randbereich 44 ohne Zwischenraum direkt in die Schaufelträgerfläche 45 über.

Jede Leitschaufel 25 verfügt an der der Schaufelträgerfläche 45 radial abgewandten Außenseite über einen äußeren Randbereich 46, der sich wie der innere Randbereich 44 zwischen der freien Eintrittskante 42 und der freien Austrittskante 43 erstreckt. Anders als der innere Randbereich 44 ist jedoch der äußere Randbereich 46 zweckmäßigerweise in der Form einer freien Außenkante 47 ausgebildet, die an der den Leitschaufelkranz 26 umschließenden äußeren Begrenzungswand 18 nicht befestigt ist. Dies ist exemplarisch von Vorteil, wo die äußere Begrenzungswand 18 an der abnehmbaren Auffangschale 16 ausgebildet ist. Es ist jedoch zweckmäßig, wenn der Durchmesser der ringförmigen äußeren Begrenzungswand 18 derart auf den Außendurchmesser des Leitschaufelkranzes 26 abgestimmt ist, dass sich die Leitschaufeln 25 mit ihren freien Außenkanten 47 an der äußeren Begrenzungswand 18 radial abstützen können.

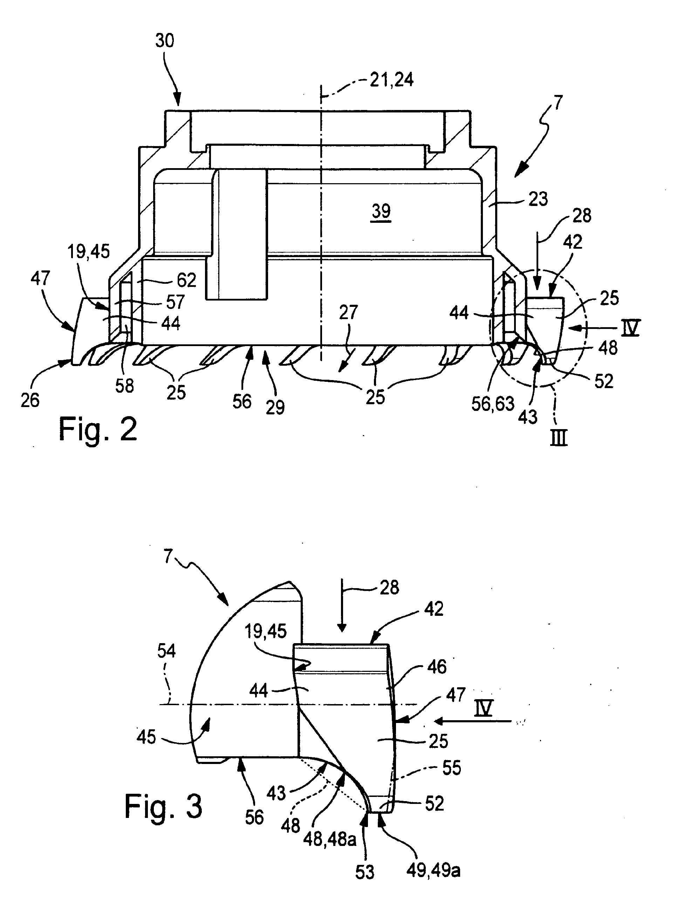

Wie vor allem die Figur 3 sehr gut zeigt, erstreckt sich die nach unten weisende freie Austrittskante 43 nicht in einer Radialebene zu der Mittellängsachse 21 und verläuft zweckmäßigerweise auch nicht parallel zu der Eintrittskante 42. Vielmehr ist die Austrittskante 43 in mindestens zwei Längenabschnitte 48a, 49a unterteilt, die sich in der Richtung ausgehend vom inneren Randbereich 44 hin zur Außenkante 47 aneinander anschließen und von denen der radial näher beim inneren Randbereich 44 liegende innere Längenabschnitt 48a eine Tropfenableitkante 48 bildet, während der sich nach radial außen hin daran anschließende äußere Längenabschnitt 49a eine Tropfenabrisskante 49 einer Tropfenabrisszone 52 der Leitschaufel 25 bildet. Hierbei ist die Besonderheit zu erwähnen, dass die Tropfenableitkante 48 eine bezüglich der Mittellängsachse 21 radial nach außen orientierte radiale Erstreckungskomponente hat und außerdem eine dieser radialen Erstreckungskomponente überlagerte, in Achsrichtung der Mittellängsachse 21 nach unten orientierte axiale Erstreckungskomponente. Insgesamt verfügt die Tropfenableitkante 48 mithin über einen bezogen auf die Mittellängsachse 21 nach radial außen und zugleich nach unten in Richtung zu der Kondensatauffangkammer 14 orientierten Verlauf.

Vorzugsweise ist die Tropfenableitkante 48 konkav gekrümmt, wie dies beim Ausführungsbeispiel der Fall ist. Es liegt hierbei insbesondere eine durchgehend stetig bogenförmige konkave Krümmung vor.

Eine in Figur 3 gepunktet illustrierte Variante einer Tropfenableitkante 48 verfügt über einen geradlinigen, schrägen Verlauf.

Nicht abgebildet ist eine ebenfalls zweckmäßige Zusammensetzung der Tropfenableitkante 48 aus mehreren, winkelig aneinander anschließenden geradlinigen Längenabschnitten.

Der Abstand zwischen der Eintrittskante 42 und der Austrittskante 43 ist an dem der inneren Begrenzungswand 19 am nächsten liegenden inneren Endbereich der Tropfenableitkante 48 jedenfalls zweckmäßigerweise kleiner als im Bereich der Tropfenabrisskante 49.

Die Tropfenabrisskante 49 hat bevorzugt einen geradlinigen Verlauf und erstreckt sich zweckmäßigerweise in einer zur Mittellängsachse 21 radialen Ebene. Sie ist vorzugsweise radial bezüglich der Mittellängsachse 21 ausgebildet. Insbesondere kann die Tropfenabrisskante 49 parallel zu der Eintrittskante 42 verlaufen. In all diesen Fällen ist die Tropfenabrisskante 49 jedoch kürzer als die Eintrittskante 42. Wenn man davon ausgeht, dass beim Ausführungsbeispiel der Bereich maximaler Breite jeder Leitschaufel 25 an der freien Eintrittskante 42 liegt - die Breitenrichtung der Leitschaufel 25 ist als mit der Längsrichtung der Eintrittskante 42 und der Austrittskante 43 zusammenfallende Richtung zu verstehen -, ist somit die Leitschaufel 25 im Bereich der Tropfenabrisskante 49 schmäler als im Bereich der Eintrittskante 42 ausgebildet. Vorzugsweise beträgt die Breite der Leitschaufel 25 im Bereich der Tropfenabrisskante 49 maximal die Hälfte der an der Eintrittskante 42 gemessenen Breite und insbesondere lediglich 5 % bis 30 % dieser maximalen Breite.

Zwischen der Tropfenableitkante 48 und der Tropfenabrisskante 49 weist die Austrittskante 43 zweckmäßigerweise einen Knick 53 auf. Dieser Knick 53 äußert sich insbesondere als nach unten weisender, exponiert hervorstehender Knickbereich.

Bei einem nicht dargestellten Ausführungsbeispiel erstreckt sich die Tropfenableitkante 48 nach radial außen bis hin zu der Außenkante 47 der Leitschaufel 25. In diesem Falle hat die Tropfenabrisszone 52 eine spitze Kontur.

Allen Ausführungsbeispielen ist jedoch gemeinsam, dass die Tropfenabrisskante 49 bezüglich einer zu der Mittellängsachse 21 rechtwinkeligen Radialebene 54 weniger steil verläuft als der sich radial innen unmittelbar daran anschließende äußere Endbereich der Tropfenableitkante 48.

Beim Ausführungsbeispiel hat die Außenkante 47 der Leitschaufeln 25 einen im Wesentlichen geradlinigen Verlauf. Es wäre jedoch ohne weiteres möglich, die Außenkante 47 mit einem Knick zu versehen, so dass sie mit einem unteren Endabschnitt schräg verlaufend in die Tropfenabrisskante 49 übergeht. Diese Variante ist in Figur 3 bei 55 durch eine strichpunktierte Linie angedeutet.

Wenn im Betrieb des Kondensatabscheiders 1 aufgrund einer zu geringen Strömungsgeschwindigkeit das Kondensat an den Leitschaufeln 25 und/oder an der inneren Begrenzungswand 19 abläuft, werden die Kondensattropfen durch die nach radial außen und zugleich nach unten orientierte Tropfenableitkante 48 dazu veranlasst, sich in Richtung zu der tiefer liegenden Tropfenabrisszone 52 beziehungsweise Tropfenabrisskante 49 zu bewegen, von wo aus sie dann nach unten in die Kondensatauffangkammer 14 abtropfen können. Es besteht mithin insbesondere nicht die Gefahr, dass sich Kondensattropfen an der Unterseite 29 des Leitschaufelträgers 23 im Bereich der Durchgangsöffnung 39 ansammeln, von wo aus sie durch die in unmittelbarer Nähe vorbeiströmende Druckluft zum Luftauslass 4 mitgerissen werden könnten.

Der Leitschaufelträger 23 hat an seiner Unterseite 29 zweckmäßigerweise eine untere Stirnfläche 56, die bündig in die Austrittskanten 43 übergeht, wobei zweckmäßigerweise ein unmittelbar bündiger Übergang in die Tropfenableitkanten 48 vorliegt. Dies begünstigt das Ableiten der Kondensattropfen vom Leitschaufelträger 23 zu den bezüglich der unteren Stirnfläche 56 tiefer liegenden Tropfenabrisszonen 52.

Beim Ausführungsbeispiel verfügt der Leitschaufelträger 23 über einen die Schaufelträgerfläche 45 definierenden und bezüglich der Mittellängsachse 21 konzentrischen äußeren Ringabschnitt 57 und über einen mit radialem Abstand unter Freilassung eines zu der Mittellängsachse 21 konzentrischen Ringspaltes 58 konzentrisch innerhalb des äußeren Ringabschnittes 57 angeordneten inneren Ringabschnitt 62. Der Ringspalt 58 ist axial nach unten zur Kondensatauffangkammer 14 hin offen.

Die bündig in die freien Austrittskanten 43 übergehende untere Stirnfläche 56 ist exemplarisch eine stirnseitig an dem äußeren Ringabschnitt 57 ausgebildete Ringfläche 63. Diese Ringfläche 63 kann in einer zur Mittellängsachse 21 rechtwinkeligen Radialebene verlaufen. Als vorteilhafter wird es jedoch angesehen, wenn sie gemäß Ausführungsbeispiel konisch gestaltet ist, und zwar mit einem in Richtung nach unten hin und zugleich nach radial außen hin schrägen Verlauf. Auf diese Weise ergibt sich jeweils ein Knick im Übergangsbereich zwischen der Ringfläche 63 und der freien Austrittskante 43 jeder Leitschaufel 25.

## Patentansprüche

1. Kondensatabscheider zum Abscheiden von Kondensat aus strömender Druckluft, mit einem zwischen einer Luftzuströmkammer (13) und einer sich in Gebrauchslage des Kondensatabscheiders (1) unterhalb der Luftzuströmkammer (13) befindenden Kondensatauffangkammer (14) angeordneten Luftdurchtrittsspalt (15), in dem ein sich um eine vertikale Mittellängsachse (21) herum erstreckender Leitschaufelkranz (26) einer die hindurchströmende Druckluft in Rotation versetzenden Drallerzeugungseinrichtung (7) angeordnet ist, der eine Vielzahl von in der Spaltumfangsrichtung (33) mit Abstand aufeinanderfolgenden und zwischen sich jeweils einen Luftdurchtrittskanal (34) definierenden Leitschaufeln (25) enthält, die jeweils eine der Luftzuströmkammer (13) zugewandte freie Eintrittskante (42) und eine nach unten weisende, der Kondensatauffangkammer (14) zugewandte freie Austrittskante (43) aufweisen und die jeweils bezüglich der Achsrichtung der Mittellängsachse (21) schräg angestellt sind, wobei zumindest ein Abschnitt der freien Austrittskante (43) der Leitschaufeln (25) als in eine Tropfenabrisszone (52) übergehende Tropfenableitkante (48) mit bezogen auf die Mittellängsachse (21) des Leitschaufelkranzes (26) nach radial außen und zugleich nach unten in Richtung zu der Kondensatauffangkammer (14) orientiertem Verlauf ausgebildet ist und wobei die Drallerzeugungseinrichtung (7) einen Leitschaufelträger (23) mit einer der Kondensatauffangkammer (14) zugewandten unteren Stirnfläche (56) und mit einer bezüglich der Mittellängsachse (21) konzentrischen und nach radial außen orientierten Schaufelträgerfläche (45) aufweist, wobei die Leitschaufeln (25) radial abstehend an der Schaufelträgerfläche (45) angeordnet sind, **dadurch gekennzeichnet, dass** die untere Stirnfläche (56) des Leitschaufelträgers (23) bündig in die freien Austrittskanten (43) der Leitschaufeln (25) übergeht, deren Tropfenabrisszonen (52) tiefer liegen als die untere Stirnfläche (56) des Leitschaufelträgers.

2. Kondensatabscheider nach Anspruch 1, **dadurch gekennzeichnet, dass** die Tropfenableitkante (48) einen konkav gekrümmten und/oder einen geradlinig schrägen Verlauf hat.

3. Kondensatabscheider nach Anspruch 2, **dadurch gekennzeichnet, dass** die Tropfenableitkante (48) durchgehend stetig bogenförmig gekrümmt ist.

4. Kondensatabscheider nach einem der Ansprüche 1 bis 3, **dadurch gekennzeichnet, dass** die Tropfenabrisszone (52) als Tropfenabrisskante (49) ausgebildet ist, die von einem sich bezogen auf die Mittellängsachse (21) des Leitschaufelkranzes (26) radial außen an die Tropfenableitkante (48) anschließenden Längenabschnitt der Austrittskante (43) gebildet ist.

5. Kondensatabscheider nach Anspruch 4, **dadurch gekennzeichnet, dass** die Tropfenabrisskante (49) bezüglich einer zu der Mittellängsachse (21) rechtwinkeligen Radialebene (54) weniger steil verläuft als der sich unmittelbar davor befindliche Endbereich der Tropfenableitkante (48).

6. Kondensatabscheider nach Anspruch 4 oder 5, **dadurch gekennzeichnet, dass** die Tropfenabrisskante (49) sich in einer zu der Mittellängsachse (21) rechtwinkeligen Radialebene erstreckt.

7. Kondensatabscheider nach einem der Ansprüche 1 bis 6, **dadurch gekennzeichnet, dass** jede Leitschaufel (25) einen Bereich von in bezüglich der Mittellängsachse (21) radialer Richtung gemessener maximaler Breite aufweist, wobei die Breite der Leitschaufel (25) im Bereich der Tropfenabrisszone (52) geringer ist als die Hälfte dieser maximalen Breite und insbesondere zwischen 5 % und 30 % dieser maximalen Breite beträgt.

8. Kondensatabscheider nach einem der Ansprüche 1 bis 7, **dadurch gekennzeichnet, dass** jede Leitschaufel (25) eine bezüglich der Mittellängsachse (21) radial außen liegende, sich zwischen der Eintrittskante (42) und der Austrittskante (43) erstreckende freie Außenkante (47) hat.

9. Kondensatabscheider nach einem der Ansprüche 1 bis 8, **dadurch gekennzeichnet, dass** die Austrittskante (43) jeder Leitschaufel (25) ohne Zwischenraum direkt in die Schaufelträgerfläche (45) übergeht, wobei sich die Tropfenableitkante (48) zweckmäßigerweise bis hin zu der Schaufelträgerfläche (45) erstreckt.

10. Kondensatabscheider nach einem der Ansprüche 1 bis 9, **dadurch gekennzeichnet, dass** die Stirnfläche (56) des Leitschaufelträgers (23) unmittelbar in die Tropfenableitkanten (48) der Leitschaufeln (25) übergeht.

11. Kondensatabscheider nach einem der Ansprüche 1 bis 10, **dadurch gekennzeichnet, dass** der Leitschaufelträger (23) zumindest im Bereich der Schaufelträgerfläche (45) als Hohlkörper ausgebildet ist.

12. Kondensatabscheider nach einem der Ansprüche 1 bis 11, **dadurch gekennzeichnet, dass** der Leitschaufelträger (23) über einen die Schaufelträgerfläche (45) bildenden Ringabschnitt (57) verfügt, wobei dieser Ringabschnitt (57) eine der Kondensatauffangkammer (14) zugewandte, bündig in die Austrittskanten (43) der Leitschaufeln (25) übergehende stirnseitige Ringfläche (63) aufweist, die zweckmäßigerweise konisch mit in Richtung zur Kondensatauffangkammer (14) und zugleich nach radial außen schrägem Verlauf ausgebildet ist.

13. Kondensatabscheider nach Anspruch 12, **dadurch gekennzeichnet, dass** der Ringabschnitt (57) ein äußerer Ringabschnitt ist, der mit radialem Abstand unter Freilassung eines zur Kondensatauffangkammer (14) hin offenen Ringspaltes (58) einen inneren Ringabschnitt (62) des Leitschaufelträgers (23) umschließt.

14. Kondensatabscheider nach einem der Ansprüche 1 bis 13, **dadurch gekennzeichnet, dass** er ein die Luftzuströmkammer (13) und die Kondensatauffangkammer (14) definierendes Gehäuse (2) aufweist, das zweckmäßigerweise einen Gehäusekopf (8) mit einem mit der Luftzuströmkammer (13) verbundenen Lüfteinlass (3) und einem insbesondere durch die Drallerzeugungseinrichtung (7) hindurch mit der Kondensatauffangkammer (14) verbundenen Luftauslass (4) enthält und das über eine die Kondensatauffangkammer (14) definierende, insbesondere lösbar an dem Gehäusekopf (8) angeordnete Auffangschale (16) verfügt.

## Claims

1. Condensate trap for the separation of condensate from flowing compressed air with an air passage gap (15), provided between an air inflow chamber (13) and a condensate collecting chamber (14) located beneath the air inflow chamber (13) in the position of use of the condensate trap (1), in which is mounted a guide vane rim (26), extending around a vertical central longitudinal axis (21), of a swirl generator (7) which sets the through-flowing compressed air in rotation, and which contains a multiplicity of guide vanes (25), spaced apart consecutively in the gap circumferential direction (33) and each defining between them an airflow passage (34), and each having a free leading edge (42) facing the air inflow chamber (13) and a downwards pointing free trailing edge (43) facing the condensate collecting chamber (14) and each being set at an angle relative to the axial direction of the central longitudinal axis (21), wherein at least one section of the free trailing edge (43) of the guide vanes (25) is designed as a drip lead-off edge (48) merging into a drip separation zone (52) with a course oriented radially outwards with reference to the central longitudinal axis (21) of the guide vane rim (26) and at the same time downwards towards the condensate collecting chamber (14), and wherein the swirl generator (7) has a guide vane support (23) with a bottom end face (56) which faces the condensate collecting chamber (14) and with a radially outwards oriented vane support surface (45) which is concentric relative to the central longitudinal axis (21), wherein the guide vanes (25) are mounted so as to extend radially from the vane support surface (45), **characterised in that** the bottom end face (56) of the guide vane support (23) merges flush into the free trailing edges (43) of the guide vanes (25), the drip separation zones (52) of which are lower than the bottom end face (56) of the guide vane support.

2. Condensate trap according to claim 1, **characterised in that** the drip lead-off edge (48) has a concave curved and/or a straight inclined course.

3. Condensate trap according to claim 2, **characterised in that** the drip lead-off edge (48) is constantly curved throughout.

4. Condensate trap according to any of claims 1 to 3, **characterised in that** the drip separation zone (52) is in the form of a drip separation edge (49), which is formed by a length section of the trailing edge (43) adjoining the drip lead-off edge (48) on the radial outside with reference to the central longitudinal axis (21) of the guide vane rim (26).

5. Condensate trap according to claim 4, **characterised in that** the drip separation edge (49), relative to a radial plane (54) at right-angles to the central longitudinal axis (21), runs less steeply than the immediately preceding end section of the drip lead-off edge (48).

6. Condensate trap according to claim 4 or 5, **characterised in that** the drip separation edge (49) extends in a radial plane at right-angles to the central longitudinal axis (21).

7. Condensate trap according to any of claims 1 to 6, **characterised in that** each guide vane (25) has an area of maximum width measured in the radial direction relative to the central longitudinal axis (21), wherein the width of the guide vane (25) in the area of the drip separation zone (52) is less than half this maximum width and in particular is between 5% and 30% of this maximum width.

8. Condensate trap according to any of claims 1 to 7, **characterised in that** each guide vane (25) has a free outer edge (47) lying radially outside relative to the central longitudinal axis (21) and extending between the leading edge (42) and the trailing edge (43).

9. Condensate trap according to any of claims 1 to 8, **characterised in that** the trailing edge (43) of each guide vane (25) merges directly into the vane support surface (45) without a break, wherein the drip lead-off edge (48) extends expediently up to the vane support surface (45).

10. Condensate trap according to any of claims 1 to 9, **characterised in that** the end face (56) of the guide vane support (23) merges directly into the drip lead-off edges (48) of the guide vanes (25).

11. Condensate trap according to any of claims 1 to 10, **characterised in that** the guide vane support (23) is in the form of a hollow body, at least in the area of the vane support surface (45).

12. Condensate trap according to any of claims 1 to 11, **characterised in that** the guide vane support (23) has a ring section (57) forming the vane support surface (45), wherein this ring section (57) has an end-face annular surface (63) facing the condensate collecting chamber (14), merging flush into the trailing edges (43) of the guide vanes (25) and expediently conical with an inclined course running towards the condensate collecting chamber (14) and at the same time radially outwards.

13. Condensate trap according to claim 12, **characterised in that** the ring section (57) is an outer ring section which, with radial clearance and leaving open an annular gap (58) towards the condensate collecting chamber (14), encompasses an inner ring section (62) of the guide vane support (23).

14. Condensate trap according to any of claims 1 to 13, **characterised in that** it has a housing (2) defining the air inflow chamber (13) and the condensate collecting chamber (14) and expediently containing a housing head (8) with an air inlet (3) connected to the air inflow chamber (13) and an air outlet (4) connected in particular through the swirl generator (7) to the condensate collecting chamber (14) and having a collecting tray (16) defining the condensate collecting chamber (14), mounted in particular releasably on the housing head (8).

## Revendications

1. Séparateur de condensat destiné à séparer du condensat d'un courant d'air comprimé, avec une fente de passage d'air (15) disposée entre une chambre d'afflux d'air (13) et une chambre de collecte de condensat (14) se trouvant, en position d'utilisation du séparateur de condensat (1), sous la chambre d'afflux d'air (13), dans laquelle est disposée une couronne d'aubes directrices (26) s'étendant autour d'un axe médian longitudinal vertical (21) d'un dispositif de génération de rotation (7) mettant en rotation l'air comprimé passant au travers, laquelle couronne contient une pluralité d'aubes directrices (25) se suivant à distance dans le sens périphérique de la fente (33) et définissant respectivement entre elles un canal de passage d'air (34), lesquelles aubes présentent respectivement une arête d'entrée (42) libre tournée vers la chambre d'afflux d'air (13) et une arête de sortie (43) libre tournée vers la chambre de collecte de condensat (14), dirigée vers le bas, et sont posées en biais respectivement par rapport au sens de l'axe médian longitudinal (21), au moins une section de l'arête de sortie libre (43) des aubes directrices (25) étant réalisée comme une arête d'évacuation de gouttes (48) passant en une zone de destruction de gouttes (52) avec un tracé orienté radialement vers l'extérieur par rapport à l'axe médian longitudinal (21) de la couronne d'aubes directrices (26) et en même temps vers le bas en direction de la chambre de collecte de condensat (14) et le dispositif de génération de rotation (7) présentant un support d'aubes directrices (23) avec une surface avant (56) inférieure tournée vers la chambre de collecte de condensat (14) et avec une surface porteuse d'aubes (45) orientée radialement vers l'extérieur et concentrique par rapport à l'axe médian longitudinal (21), les aubes directrices (25) étant disposées de manière à s'éloigner radialement sur la surface porteuse d'aubes (45), **caractérisé en ce que** la surface frontale inférieure (56) du support d'aubes directrices (23) passe à fleur dans les arêtes de sortie libres (43) des aubes directrices (25), dont les zones de destruction de gouttes (52) sont plus basses que la surface frontale inférieure (56) du support d'aubes directrices.

2. Séparateur de condensat selon la revendication 1, **caractérisé en ce que** l'arête d'évacuation de gouttes (48) présente un tracé courbé de manière concave et/ou oblique et linéaire.

3. Séparateur de condensat selon la revendication 2, **caractérisé en ce que** l'arête d'évacuation de gouttes (48) est courbée en continu progressivement en forme d'arc.

4. Séparateur de condensat selon l'une quelconque des revendications 1 à 3, **caractérisé en ce que** la zone de destruction de gouttes (52) est réalisée comme une arête de destruction de gouttes (49) formée par une section longitudinale de l'arête de sortie (43) contiguë à l'arête d'évacuation de gouttes (48) radialement vers l'extérieur par rapport à l'axe médian longitudinal (21) de la couronne d'aubes directrices (26).

5. Séparateur de condensat selon la revendication 4, **caractérisé en ce que** l'arête de destruction de gouttes (49) s'étend moins raide par rapport à un plan radial (54) à angles droits par rapport à l'axe médian longitudinal (21) que la zone d'extrémité se trouvant directement devant de l'arête d'évacuation de gouttes (48).

6. Séparateur de condensat selon la revendication 4 ou 5, **caractérisé en ce que** l'arête de destruction de gouttes (49) s'étend dans un plan radial à angles droits par rapport à l'axe médian longitudinal (21).

7. Séparateur de condensat selon l'une quelconque des revendications 1 à 6, **caractérisé en ce que** chaque aube directrice (25) présente une zone de largeur maximale mesurée dans la direction radiale par rapport à l'axe médian longitudinal (21), la largeur des aubes directrices (25) étant plus petite dans la zone de la zone de destruction de gouttes (52) que la moitié de cette largeur maximale et étant en particulier comprise entre 5 et 30 % de cette largeur maximale.

8. Séparateur de condensat selon l'une quelconque des revendications 1 à 7, **caractérisé en ce que** chaque aube directrice (25) présente une arête extérieure (47) libre s'étendant entre l'arête d'entrée (42) et l'arête de sortie (43), se trouvant radialement à l'extérieur par rapport à l'axe médian longitudinal (21).

9. Séparateur de condensat selon l'une quelconque des revendications 1 à 8, **caractérisé en ce que** l'arête de sortie (43) de chaque aube directrice (25) passe sans espace intermédiaire directement dans la surface porteuse d'aubes (45), l'arête d'évacuation de gouttes (48) s'étendant de manière appropriée jusqu'à la surface porteuse d'aubes (45).

10. Séparateur de condensat selon l'une quelconque des revendications 1 à 9, **caractérisé en ce que** la surface frontale (56) du support d'aubes directrices (23) passe directement dans les arêtes d'évacuation de gouttes (48) des aubes directrices (25).

11. Séparateur de condensat selon l'une quelconque des revendications 1 à 10, **caractérisé en ce que** le support d'aubes directrices (23) est réalisé au moins dans la zone de la surface porteuse d'aubes (45) comme un corps creux.

12. Séparateur de condensat selon l'une quelconque des revendications 1 à 11, **caractérisé en ce que** le support d'aubes directrices (23) dispose d'une section annulaire (57) formant la surface porteuse d'aubes (45), cette section annulaire (57) présentant une surface annulaire (63) côté avant passant à fleur dans les arêtes de sortie (43) des aubes directrices (25), tournée vers la chambre de collecte de condensat (14), laquelle surface annulaire est réalisée de manière appropriée conique avec un tracé oblique en direction de la chambre de collecte de condensat (14) et en même temps radialement vers l'extérieur.

13. Séparateur de condensat selon la revendication 12, **caractérisé en ce que** la section annulaire (57) est une section annulaire extérieure qui entoure une section annulaire intérieure (62) du support d'aubes directrices (23) à distance radiale en laissant une fente annulaire (58) ouverte vers la chambre de collecte de condensat (14).

14. Séparateur de condensat selon l'une quelconque des revendications 1 à 13, **caractérisé en ce qu'**il présente un boîtier (2) définissant la chambre d'afflux d'air (13) et la chambre de collecte de condensat (14), contenant de manière appropriée une tête de boîtier (8) avec une entrée d'air (3) reliée à la chambre d'afflux d'air (13) et une sortie d'air (4) reliée en particulier par le dispositif de génération de rotation (7) à la chambre de collecte de condensat (14) et disposant d'une coque de collecte (16) définissant la chambre de collecte de condensat (14), disposé en particulier de manière détachable sur la tête de boîtier (8).
